# FASCICULE DE BREVET EUROPEEN

(11) **EP 2 905 195 B1**
(45) Date de publication et mention de la délivrance du brevet: **30.11.2016**
(21) Numéro de dépôt: 15153771.9
(22) Date de dépôt: 04.02.2015
(51) Int. Cl.: B61K 9/10, E01B 35/06, G01B 5/00, G01B 21/00, G01N 19/00

(54) **APPAREIL DE MESURE MOBILE DU PROFIL D'UN CHAMPIGNON DE RAIL**
MOBILE MESSVORRICHTUNG FÜR EIN SCHIENENKOPFPROFIL
MOBILE RAILHEAD MEASURING DEVICE

(30) Priorité: 05.02.2014 FR 1450897
(43) Date de publication de la demande: 12.08.2015
(73) Titulaire: LEYFA Measurement, 31140 Saint Alban (FR)
(72) Inventeur: Rols, Claude, 31140 AUCAMVILLE (FR); Khiati, Alexandre, 69150 Decines-Charpieu (FR); Faure, Julien, 81700 PUYLAURENS (FR); Leymarie, Alban, 31150 GAGNAC SUR GARONNE (FR)
(74) Mandataire: Ipside

(56) Documents cités:
- FR-A- 1 388 870
- FR-A1- 2 667 287

## Description

### Domaine de l'invention

L'invention appartient au domaine de la métrologie, plus spécifiquement au domaine du contrôle des infrastructures ferroviaires pour assurer la sécurité et le confort des circulations sur ces infrastructures ferroviaires.

L'invention concerne notamment l'obtention de données géométriques relatives aux voies de circulation de véhicules sur pneus guidés, tels que les tramways.

### Etat de l'art

En zone urbaine, les transports de surface par véhicules guidés se développent car ils garantissent une emprise minimale au sol, notamment dans les virages.

Par véhicule guidé, on entend autant les moyens de transport en commun tels que les bus, tramways, métros, trains, etc., que les moyens de transport de charge tels que les ponts roulants, pour lesquels l'aspect sécuritaire est très important et pour lesquels le guidage est assuré en particulier par un rail unique, dénommé rail de guidage. Ce rail de guidage sert de guide à un organe de guidage du véhicule guidé Cet organe de guidage prend généralement appui sur ledit rail de guidage et suit sa trajectoire au cours du déplacement dudit véhicule guidé. L'organe de guidage permet par exemple à un système de guidage de diriger un essieu directeur du véhicule guidé selon la trajectoire définie par le rail de guidage, ledit essieu directeur étant par exemple pourvue de roues porteuses, lesquelles sont positionnées chacune sur une bande de roulement de part et d'autre du rail de guidage.

De manière générale, le rail de guidage est formé d'une semelle, fixée au sol, et d'une âme supportant une tête, communément dénommée champignon.

Il existe de nombreuses variantes d'organes de guidage adaptées à ce type de rail de guidage. Pour exemple, un organe de guidage comporte une paire de galets de guidage, montés en V, et pourvus chacun de mentonnets permettant d'enserrer le rail de guidage, de part et d'autre de l'âme, au niveau de parties inférieures du champignon.

Une telle configuration d'organes de guidage permet théoriquement de guider le véhicule guidé jusqu'à son arrêt.

Cependant, en pratique, quelle que soit la variante de l'organe de guidage considérée, l'extraction des galets de guidage hors du champignon est possible.

C'est le cas par exemple lorsque un effort vertical d'arrachement dirigé vers le haut est appliqué sur les galets de guidage de façon à ce qu'une déformation des pièces (mentonnet et/ou champignon et/ou axe des galets) fasse que la distance entre les mentonnets dépasse la largeur du champignon. Un tel effet peut apparaître lorsque la dénivellation entre les bandes de roulement et une partie supérieure du champignon est trop importante.

C'est également le cas lors de l'usure des galets de guidage et/ou du rail de guidage. Le non maintien des limites de tolérance des dimensions des organes de guidage et/ou du rail de guidage peut conduire à un risque de déguidage.

Dans tous les cas, les galets de guidage n'enserrent plus suffisamment le rail de guidage et peuvent se retrouver positionnés soit sur ledit rail de guidage soit à côté de celui-ci. Un braquage des roues porteuses du véhicule guidé peut alors faire sortir celui-ci de sa trajectoire initialement prévue.

### Exposé de l'invention

La présente invention a pour but de pallier aux inconvénients précédemment évoqués et notamment au manque de dispositifs de mesure de l'état d'une voie de circulation d'un véhicule guidé.

Un objectif de la présente invention est de proposer un dispositif simple, sûr et fiable, de mesure et de contrôle des côtes limites transversales du rail de guidage, telles que la largeur ou encore le profil du champignon, pour se prémunir contre les déguidages. Un tel contrôle permet de renforcer les procédures de surveillance et maintenance du rail de guidage afin de garantir un niveau de sécurité prévu lors de la mise en exploitation commerciale du véhicule guidé.

Il existe aussi une configuration d'organes de guidage telle qu'elle est représentée à la figure 3 du document FR 1 388 870 A.

Un autre objectif de la présente invention est de proposer un dispositif de mesure d'une dénivellation entre les bandes de roulement et la face supérieure du champignon du rail de guidage, également pour se prémunir contre les déguidages.

A cet effet, il est proposé par la présente invention un dispositif de mesure de l'état d'une voie de circulation d'un véhicule guidé, ladite voie de circulation comportant un rail de guidage, d'axe longitudinal X, destiné à accueillir un organe de guidage dudit véhicule guidé, ledit rail de guidage comportant une semelle, une âme et une tête dénommée champignon. Le dispositif de mesure comporte :
- un chariot de guidage, destiné à être disposé le long de l'axe longitudinal X du rail de guidage,
- deux organes palpeurs, solidaires du chariot de guidage, destinés à être positionnés de part et d'autre du rail de guidage lorsque le dispositif de mesure est en position sur la voie de circulation,
- un moyen de rappel d'un organe palpeur vers l'autre organe palpeur, destiné à rapprocher les deux organes palpeurs selon un axe transversal Y, perpendiculaire à l'axe longitudinal X,
- un organe de mesure d'un écartement entre les deux organes palpeurs.

Le chariot de guidage est destiné à être positionné sur le rail de guidage, en vis-à-vis d'une face supérieure du champignon.

Les organes palpeurs sont disposés sur le chariot de guidage de façon telle que, lorsque le chariot de guidage est en position sur le rail de guidage, lesdits organes palpeurs sont sensiblement sur un même axe transversal Y, axe transversal qui défini un axe de mesure du dispositif de mesure.

Les organes palpeurs sont chacun solidaires d'un bras oscillant. Chaque bras oscillant est solidaire du chariot de guidage.

Le moyen de rappel d'un organe palpeur est destiné à maintenir plaqué l'organe palpeur associé contre un flanc du champignon du rail de guidage. Le moyen de rappel d'un organe palpeur est configuré pour rapprocher l'organe palpeur associé vers l'autre organe palpeur.

Un tel dispositif de mesure permet avantageusement de circuler sur le rail de guidage et d'enregistrer, via l'organe de mesure, les côtes limites transversales souhaitées du rail de guidage, telles que par exemple une largeur maximale du champignon ou encore le profil transversal dudit champignon.

Dans le cas de la mesure de la largeur maximale du champignon, les organes palpeurs sont configurés, en dimension, de sorte à venir se plaquer, lorsque le chariot de guidage est en position sur le rail de guidage, au niveau de la plus grande largeur du rail de guidage, c'est-à-dire au niveau du champignon.

Les organes palpeurs étant plaqués contre le champignon au niveau de sa largeur maximale, la mesure de leur écartement, via l'organe de mesure, traduit la mesure de la largeur maximale du champignon. Ainsi, une variation de l'écartement des organes palpeurs traduit une variation de la largeur maximale du champignon.

La mesure de cote transversale du rail de guidage est préférentiellement réalisée pas à pas par un utilisateur poussant ou entraînant le dispositif de mesure.

Pour chaque positionnement du chariot de guidage le long de l'axe longitudinal X du rail de guidage, une mesure d'écartement entre les organes palpeurs est réalisée par l'organe de mesure, stockée dans un système d'enregistrement des mesures et convertit en une mesure de cote transversale du rail de guidage.

Suivant des modes de réalisation préférés, l'invention répond en outre aux caractéristiques suivantes, mises en oeuvre séparément ou en chacune de leurs combinaisons techniquement opérantes.

Dans des modes de réalisations préférés, le dispositif de mesure comporte deux moyens de rappel, un moyen de rappel par organe palpeur.

Chaque moyen de rappel d'un organe palpeur est destiné à maintenir plaqué l'organe palpeur associé contre un flanc du champignon du rail de guidage. Chaque moyen de rappel d'un organe palpeur est configuré pour rapprocher l'organe palpeur associé vers l'autre organe palpeur.

Dans des modes de réalisations préférés, le dispositif de mesure comporte des moyens de maintien en voie.

Les moyens de maintien en voie sont configurés pour, et destinés à, permettre au chariot de guidage de suivre le rail de guidage.

Dans des exemples préférés de réalisation, des moyens de maintien en voie sont au nombre de deux, distants, longitudinalement, entre eux et avec les deux organes palpeurs sur le chariot de guidage.

Dans une forme de réalisation, chaque moyen de maintien en voie comporte une paire de deux organes d'appui.

Les organes d'appui sont destinés à être positionnés de part et d'autre du rail de guidage contre les flancs du champignon, lorsque le chariot de guidage est en position sur le rail de guidage. Un organe d'appui est fixé au chariot de guidage et l'autre organe d'appui est solidaire du chariot de guidage, autorisant une rotation selon un axe vertical Z, perpendiculaire à l'axe longitudinal X, lorsque le chariot de guidage est en position sur le rail de guidage.

Dans des modes de réalisations préférés, le dispositif de mesure comporte des moyens de mise en voie. Les moyens de mise en voie sont configurés pour, et destinés à, positionner le chariot de guidage vis-à-vis du rail de guidage.

Dans des exemples préférés de réalisation, des moyens de maintien en voie sont au nombre de deux, distants, longitudinalement, entre eux sur le chariot de guidage, de préférence aux extrémités longitudinales du chariot de guidage.

Dans des formes préférées de réalisation des organes palpeurs, lesdits organes palpeurs sont des galets cylindriques.

Dans des formes de réalisations préférées, au moins un organe palpeur présente une excroissance. L'excroissance est rentrante, en direction du rail, lorsque le chariot de guidage est en position sur le rail de guidage.

Une telle forme de réalisation est adaptée à la mesure du profil du champignon du rail de guidage.

De préférence, les deux organes palpeurs comportent une excroissance, chacune positionnée en vis-à-vis de l'autre.

Dans des modes de réalisations préférés, le dispositif de mesure comporte des moyens de réglage d'un organe palpeur. De tels moyens de réglage permettent de positionner l'excroissance de l'organe palpeur pour effectuer une mesure de cote du champignon, suivant la cote souhaitée, et pas nécessairement la largeur maximale du champignon.

Dans des modes de réalisations préférés, le dispositif de mesure comporte des moyens de déplacement de l'organe palpeur. De tels moyens de déplacement permettent la mesure de différentes cotes du champignon du rail de guidage, pour une même position du dispositif de mesure selon l'axe longitudinal X.

Dans des modes de réalisations préférés, le dispositif de mesure comporte une pluralité d'organes palpeurs assemblés par paire.

Dans des modes de réalisations préférés, le dispositif de mesure comporte deux moyens de roulage destinés à prendre appui et à faire rouler le chariot de guidage sur la face supérieure du champignon du rail de guidage. Les deux moyens de roulage sont distants longitudinalement l'un de l'autre. Les bras oscillants sont de préférence disposés sur le chariot de guidage de telle sorte que lesdits bras oscillants soient positionnés au centre de l'empattement entre les deux moyens de roulage.

Dans des modes de réalisations préférés, la voie de circulation comporte en outre deux bandes de roulement, de part et d'autre du rail de guidage, destinées à recevoir chacune des roues porteuses du véhicule guidé. Le dispositif de mesure comporte :
- un cadre, fixe, lié au chariot de guidage,
- un second cadre, mobile par rapport audit cadre fixe,
- deux demi-essieux, s'étendant de part et d'autre du chariot de guidage, solidaires du second cadre et comportant chacun un moyen d'appui destiné à prendre appui sur une bande de roulement de la voie de circulation.

Le second cadre est destiné à être mobile selon l'axe vertical Z lorsque le chariot de guidage est en position sur le rail de guidage.

Un tel dispositif de mesure permet avantageusement de s'affranchir du roulis du chariot de guidage, notamment lorsque le rail de guidage ne présente pas une largeur suffisante pour que le chariot de guidage y prenne appui.

Dans des modes de réalisations préférés, le dispositif de mesure comporte un moyen de mesure du déplacement du second cadre par rapport au cadre fixe.

Un tel mode de réalisation permet avantageusement de mesurer une flèche de la voie de circulation.

La flèche d'une voie de circulation correspond à la dénivellation, selon l'axe Z, entre un plan formé par les deux bandes de roulement et un plan formé par une face supérieure du champignon sur laquelle s'appuie le chariot de guidage.

La flèche repose sur le débattement selon l'axe vertical Z du cadre mobile par rapport au cadre fixe.

La mesure de flèche de la voie de circulation est préférentiellement réalisée pas à pas par un utilisateur poussant ou entraînant le dispositif de mesure.

Pour chaque positionnement du chariot de guidage le long de l'axe longitudinal X du rail de guidage, une mesure du débattement vertical entre le cadre fixe et le cadre mobile est réalisée par le moyen de mesure, stockée dans un système d'enregistrement des mesures et convertit en une mesure de cote transversale du rail de guidage.

Dans des modes de réalisations préférés, pour faciliter le stockage et le transport du chariot de mesure, au moins un demi-essieu est repliable, de préférence, les deux demi-essieux sont repliables.

Dans des modes de réalisations préférés, le dispositif de mesure comporte un capteur de température.

Dans des modes de réalisations préférés, le dispositif de mesure comporte un capteur de déplacement linéaire destiné à mesurer une flèche horizontale entre un bras oscillant et un cadre inférieur d'un châssis du chariot de guidage.

Dans des modes de réalisations préférés, le dispositif de mesure comporte un codeur angulaire destiné à mesure une distance, selon un axe vertical Z perpendiculaire à l'axe longitudinal X, entre la face supérieure du champignon du rail de guidage et une bande de roulement.

L'invention est également relative à un dispositif de mesure de l'état d'une voie de circulation d'un véhicule guidé, ladite voie de circulation comportant un rail de guidage, d'axe longitudinal X, destiné à accueillir un organe de guidage dudit véhicule guidé, et deux bandes de roulement, de part et d'autre du rail de guidage, destinées à recevoir chacune des roues porteuses du véhicule guidé. Ledit rail de guidage comporte une semelle, une âme et une tête dénommée champignon. Le dispositif de mesure comporte :
- un chariot de guidage, destiné à être disposé le long de l'axe longitudinal X du rail de guidage,
- un cadre, fixe, lié au chariot de guidage,
- un second cadre, mobile par rapport audit cadre fixe,
- deux demi-essieux, s'étendant de part et d'autre du chariot de guidage, solidaires du second cadre et comportant chacun un moyen d'appui destiné à prendre appui sur une bande de roulement de la voie de circulation,
- un moyen de mesure du déplacement du second cadre par rapport au cadre fixe

Un tel mode de réalisation permet avantageusement de mesurer une flèche de la voie de circulation.

La flèche d'une voie de circulation correspond à la dénivellation, selon l'axe Z, entre un plan formé par les deux bandes de roulement et un plan formé par une face supérieure du champignon sur laquelle s'appuie le chariot de guidage.

La flèche repose sur le débattement selon l'axe vertical Z du cadre mobile par rapport au cadre fixe.

La mesure de flèche de la voie de circulation est préférentiellement réalisée pas à pas par un utilisateur poussant ou entraînant le dispositif de mesure.

Pour chaque positionnement du chariot de guidage le long de l'axe longitudinal X du rail de guidage, une mesure du débattement vertical entre le cadre fixe et le cadre mobile est réalisée par le moyen de mesure, stockée dans un système d'enregistrement des mesures et convertit en une mesure de cote transversale du rail de guidage.

Suivant des modes de réalisation préférés, l'invention répond en outre aux caractéristiques suivantes, mises en oeuvre séparément ou en chacune de leurs combinaisons techniquement opérantes.

Dans des modes de réalisations préférés, pour faciliter le stockage et le transport du chariot de mesure, au moins un demi-essieu est repliable, de préférence, les deux demi-essieux sont repliables.

Dans des modes de réalisations préférés, le dispositif de mesure comporte un capteur de température.

Dans des modes de réalisations préférés, le dispositif de mesure comporte :
- deux organes palpeurs, solidaires du chariot de guidage, destinés à être positionnés de part et d'autre du rail de guidage lorsque le dispositif de mesure est en position sur la voie de circulation,
- un moyen de rappel d'un organe palpeur vers l'autre organe palpeur, destiné à rapprocher les deux organes palpeurs selon un axe transversal Y, perpendiculaire à l'axe longitudinal X,
- un organe de mesure d'un écartement entre les deux organes palpeurs.

Le chariot de guidage est destiné à être positionné sur le rail de guidage, en vis-à-vis de la face supérieure du champignon.

Les organes palpeurs sont disposés sur le chariot de guidage de façon telle que, lorsque le chariot de guidage est en position sur le rail de guidage, lesdits organes palpeurs sont sensiblement sur un même axe transversal Y, axe transversal qui défini un axe de mesure du dispositif de mesure.

Les organes palpeurs sont chacun solidaires d'un bras oscillant. Chaque bras oscillant est solidaire du chariot de guidage.

Le moyen de rappel d'un organe palpeur est destiné à maintenir plaqué l'organe palpeur associé contre un flanc du champignon du rail de guidage. Le moyen de rappel d'un organe palpeur est configuré pour rapprocher l'organe palpeur associé vers l'autre organe palpeur.

Un tel dispositif de mesure permet avantageusement de circuler sur le rail de guidage et d'enregistrer, via l'organe de mesure, les côtes limites transversales souhaitées du rail de guidage, telles que par exemple une largeur maximale du champignon ou encore le profil transversal dudit champignon.

Dans le cas de la mesure de la largeur maximale du champignon, les organes palpeurs sont configurés, en dimension, de sorte à venir se plaquer, lorsque le chariot de guidage est en position sur le rail de guidage, au niveau de la plus grande largeur du rail de guidage, c'est-à-dire au niveau du champignon.

Les organes palpeurs étant plaqués contre le champignon au niveau de sa largeur maximale, la mesure de leur écartement, via l'organe de mesure, traduit la mesure de la largeur maximale du champignon. Ainsi, une variation de l'écartement des organes palpeurs traduit une variation de la largeur maximale du champignon.

La mesure de cote transversale du rail de guidage est préférentiellement réalisée pas à pas par un utilisateur poussant ou entraînant le dispositif de mesure.

Pour chaque positionnement du chariot de guidage le long de l'axe longitudinal X du rail de guidage, une mesure d'écartement entre les organes palpeurs est réalisée par l'organe de mesure, stockée dans le système d'enregistrement des mesures et convertit en une mesure de cote transversale du rail de guidage.

Dans des modes de réalisations préférés, le dispositif de mesure comporte deux moyens de rappel, un moyen de rappel par organe palpeur.

Chaque moyen de rappel d'un organe palpeur est destiné à maintenir plaqué l'organe palpeur associé contre un flanc du champignon du rail de guidage. Chaque moyen de rappel d'un organe palpeur est configuré pour rapprocher l'organe palpeur associé vers l'autre organe palpeur.

Dans des modes de réalisations préférés, le dispositif de mesure comporte des moyens de maintien en voie.

Les moyens de maintien en voie sont configurés pour, et destinés à, permettre au chariot de guidage de suivre le rail de guidage.

Dans des exemples préférés de réalisation, des moyens de maintien en voie sont au nombre de deux, distants, longitudinalement, entre eux et avec les deux organes palpeurs sur le chariot de guidage.

Dans une forme de réalisation, chaque moyen de maintien en voie comporte une paire de deux organes d'appui.

Les organes d'appui sont destinés à être positionnés de part et d'autre du rail de guidage contre les flancs du champignon, lorsque le chariot de guidage est en position sur le rail de guidage. Un organe d'appui est fixé au chariot de guidage et l'autre organe d'appui est solidaire du chariot de guidage, autorisant une rotation selon un axe vertical Z, perpendiculaire à l'axe longitudinal X, lorsque le chariot de guidage est en position sur le rail de guidage.

Dans des modes de réalisations préférés, le dispositif de mesure comporte des moyens de mise en voie. Les moyens de mise en voie sont configurés pour, et destinés à, positionner le chariot de guidage vis-à-vis du rail de guidage.

Dans des exemples préférés de réalisation, des moyens de maintien en voie sont au nombre de deux, distants, longitudinalement, entre eux sur le chariot de guidage, de préférence aux extrémités longitudinales du chariot de guidage.

Dans des formes préférées de réalisation des organes palpeurs, lesdits organes palpeurs sont des galets cylindriques.

Dans des formes de réalisations préférées, au moins un organe palpeur présente une excroissance. L'excroissance est rentrante, en direction du rail, lorsque le chariot de guidage est en position sur le rail de guidage.

Une telle forme de réalisation est adaptée à la mesure du profil du champignon du rail de guidage.

De préférence, les deux organes palpeurs comportent une excroissance, chacune positionnée en vis-à-vis de l'autre.

Dans des modes de réalisations préférés, le dispositif de mesure comporte des moyens de réglage d'un organe palpeur. De tels moyens de réglage permettent de positionner l'excroissance de l'organe palpeur pour effectuer une mesure de cote du champignon, suivant la cote souhaitée, et pas nécessairement la largeur maximale du champignon.

Dans des modes de réalisations préférés, le dispositif de mesure comporte des moyens de déplacement de l'organe palpeur. De tels moyens de déplacement permettent la mesure de différentes cotes du champignon du rail de guidage, pour une même position du dispositif de mesure selon l'axe longitudinal X.

Dans des modes de réalisations préférés, le dispositif de mesure comporte une pluralité d'organes palpeurs assemblés par paire.

Dans des modes de réalisations préférés, le dispositif de mesure comporte deux moyens de roulage destinés à prendre appui et à faire rouler le chariot de guidage sur la face supérieure du champignon du rail de guidage. Les deux moyens de roulage sont distants longitudinalement l'un de l'autre. Les bras oscillants sont de préférence disposés sur le chariot de guidage de telle sorte que lesdits bras oscillants soient positionnés au centre de l'empattement entre les deux moyens de roulage.

Dans des modes de réalisations préférés, le dispositif de mesure comporte un capteur de déplacement linéaire destiné à mesurer une flèche horizontale entre un bras oscillant et un cadre inférieur d'un châssis du chariot de guidage.

Dans des modes de réalisations préférés, le dispositif de mesure comporte un codeur angulaire destiné à mesure une distance, selon un axe vertical Z perpendiculaire à l'axe longitudinal X, entre la face supérieure du champignon du rail de guidage et une bande de roulement.

L'invention est également relative à un dispositif de mesure de l'état d'une voie ferrée comportant au moins un rail de guidage, d'axe longitudinal X, comportant une tête dénommée champignon. Le dispositif de mesure comporte :
- un chariot de guidage, destiné à être disposé le long de l'axe longitudinal X du rail de guidage,
- deux organes palpeurs, solidaires du chariot de guidage, destinés à être positionnés de part et d'autre du rail de guidage lorsque le dispositif de mesure est en position sur la voie ferrée,

- un moyen de rappel d'un organe palpeur vers l'autre organe palpeur, destiné à rapprocher les deux organes palpeurs selon un axe transversal Y, perpendiculaire à l'axe longitudinal X,
- un organe de mesure d'un écartement entre les deux organes palpeurs.

Le chariot de guidage est destiné à être positionné sur le rail de guidage, en vis-à-vis d'une face supérieure du champignon.

Les organes palpeurs sont disposés sur le chariot de guidage de façon telle que, lorsque le chariot de guidage est en position sur le rail de guidage, lesdits organes palpeurs sont sensiblement sur un même axe transversal Y, axe transversal qui défini un axe de mesure du dispositif de mesure.

Les organes palpeurs sont chacun solidaires d'un bras oscillant. Chaque bras oscillant est solidaire du chariot de guidage.

Le moyen de rappel d'un organe palpeur est destiné à maintenir plaqué l'organe palpeur associé contre un flanc du champignon du rail de guidage. Le moyen de rappel d'un organe palpeur est configuré pour rapprocher l'organe palpeur associé vers l'autre organe palpeur.

Un tel dispositif de mesure permet avantageusement de circuler sur le rail de guidage et d'enregistrer, via l'organe de mesure, les côtes limites transversales souhaitées du rail de guidage, telles que par exemple une largeur maximale du champignon ou encore le profil transversal dudit champignon.

Dans le cas de la mesure de la largeur maximale du champignon, les organes palpeurs sont configurés, en dimension, de sorte à venir se plaquer, lorsque le chariot de guidage est en position sur le rail de guidage, au niveau de la plus grande largeur du rail de guidage, c'est-à-dire au niveau du champignon.

Les organes palpeurs étant plaqués contre le champignon au niveau de sa largeur maximale, la mesure de leur écartement, via l'organe de mesure, traduit la mesure de la largeur maximale du champignon. Ainsi, une variation de l'écartement des organes palpeurs traduit une variation de la largeur maximale du champignon.

La mesure de cote transversale du rail de guidage est préférentiellement réalisée pas à pas par un utilisateur poussant ou entraînant le dispositif de mesure.

Pour chaque positionnement du chariot de guidage le long de l'axe longitudinal X du rail de guidage, une mesure d'écartement entre les organes palpeurs est réalisée par l'organe de mesure, stockée dans un système d'enregistrement des mesures et convertit en une mesure de cote transversale du rail de guidage.

Suivant des modes de réalisation préférés, l'invention répond en outre aux caractéristiques suivantes, mises en oeuvre séparément ou en chacune de leurs combinaisons techniquement opérantes.

Dans des modes de réalisations préférés, le dispositif de mesure comporte deux moyens de rappel, un moyen de rappel par organe palpeur.

Chaque moyen de rappel d'un organe palpeur est destiné à maintenir plaqué l'organe palpeur associé contre un flanc du champignon du rail de guidage. Chaque moyen de rappel d'un organe palpeur est configuré pour rapprocher l'organe palpeur associé vers l'autre organe palpeur.

Dans des modes de réalisations préférés, le dispositif de mesure comporte des moyens de maintien en voie.

Les moyens de maintien en voie sont configurés pour, et destinés à, permettre au chariot de guidage de suivre le rail de guidage.

Dans des exemples préférés de réalisation, des moyens de maintien en voie sont au nombre de deux, distants, longitudinalement, entre eux et avec les deux organes palpeurs sur le chariot de guidage.

Dans une forme de réalisation, chaque moyen de maintien en voie comporte une paire de deux organes d'appui.

Les organes d'appui sont destinés à être positionnés de part et d'autre du rail de guidage contre les flancs du champignon, lorsque le chariot de guidage est en position sur le rail de guidage. Un organe d'appui est fixé au chariot de guidage et l'autre organe d'appui est solidaire du chariot de guidage, autorisant une rotation selon un axe vertical Z, perpendiculaire à l'axe longitudinal X, lorsque le chariot de guidage est en position sur le rail de guidage.

Dans des modes de réalisations préférés, le dispositif de mesure comporte des moyens de mise en voie. Les moyens de mise en voie sont configurés pour, et destinés à, positionner le chariot de guidage vis-à-vis du rail de guidage.

Dans des exemples préférés de réalisation, des moyens de maintien en voie sont au nombre de deux, distants, longitudinalement, entre eux sur le chariot de guidage, de préférence aux extrémités longitudinales du chariot de guidage.

Dans des formes préférées de réalisation des organes palpeurs, lesdits organes palpeurs sont des galets cylindriques.

Dans des formes de réalisations préférées, au moins un organe palpeur présente une excroissance. L'excroissance est rentrante, en direction du rail, lorsque le chariot de guidage est en position sur le rail de guidage.

Une telle forme de réalisation est adaptée à la mesure du profil du champignon du rail de guidage.

De préférence, les deux organes palpeurs comportent une excroissance, chacune positionnée en vis-à-vis de l'autre.

Dans des modes de réalisations préférés, le dispositif de mesure comporte des moyens de réglage d'un organe palpeur. De tels moyens de réglage permettent de positionner l'excroissance de l'organe palpeur pour effectuer une mesure de cote du champignon, suivant la cote souhaitée, et pas nécessairement la largeur maximale du champignon.

Dans des modes de réalisations préférés, le dispositif de mesure comporte des moyens de déplacement de l'organe palpeur. De tels moyens de déplacement permettent la mesure de différentes cotes du champignon du rail de guidage, pour une même position du dispositif de mesure selon l'axe longitudinal X.

Dans des modes de réalisations préférés, le dispositif de mesure comporte une pluralité d'organes palpeurs assemblés par paire.

Dans des modes de réalisations préférés, le dispositif de mesure comporte deux moyens de roulage destinés à prendre appui et à faire rouler le chariot de guidage sur la face supérieure du champignon du rail de guidage. Les deux moyens de roulage sont distants longitudinalement l'un de l'autre. Les bras oscillants sont de préférence disposés sur le chariot de guidage de telle sorte que lesdits bras oscillants soient positionnés au centre de l'empattement entre les deux moyens de roulage.

Dans des modes de réalisations préférés, le dispositif de mesure comporte un capteur de déplacement linéaire destiné à mesurer une flèche horizontale entre un bras oscillant et un cadre inférieur d'un châssis du chariot de guidage.

### Présentation des figures

L'invention sera maintenant plus précisément décrite dans le cadre de modes de réalisation préférés, qui n'en sont nullement limitatifs, représentés sur les figures 1 à 13, dans lesquelles :
La figure 1 représente une coupe transversale d'un rail de guidage pour véhicule guidé,
La figure 2 représente une vue en perspective d'un dispositif de mesure selon un mode de réalisation de l'invention,
La figure 3 représente une vue de dessus du dispositif de mesure de la figure 2,
La figure 4 représente une vue de devant du dispositif de mesure de la figure 2,
La figure 5 représente une vue en perspective du châssis du dispositif de mesure de la figure 2,
La figure 6 représente une vue en perspective de l'arrière du dispositif de mesure de la figure 2,
La figure 7 représente une vue en perspective de l'avant du dispositif de mesure de la figure 2,
La figure 8 représente une vue en perspective des systèmes d'écartement des bras oscillants du dispositif de mesure de la figure 2,
La figure 9 illustre une vue de dessus des moyens de mesure de cote du rail de guidage,
La figure 10 illustre une vue en perspective des moyens de mesure d'une cote du rail de guidage de la figure 9,
La figure 11 illustre une vue en perspective des moyens de mesure d'une flèche de la voie de circulation,
La figure 12 illustre un exemple de réalisation de repliement du dispositif de mesure de la figure 2,
La figure 13 représente, par une vue de dessus, un schéma cinématique du dispositif de mesure de la figure 2.

### Description détaillée de l'invention

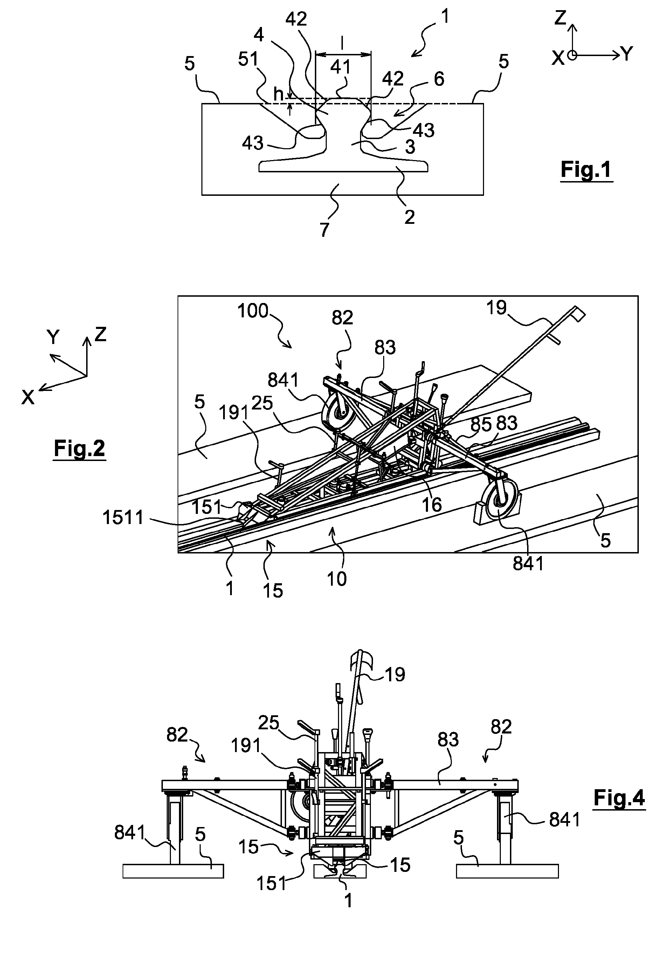

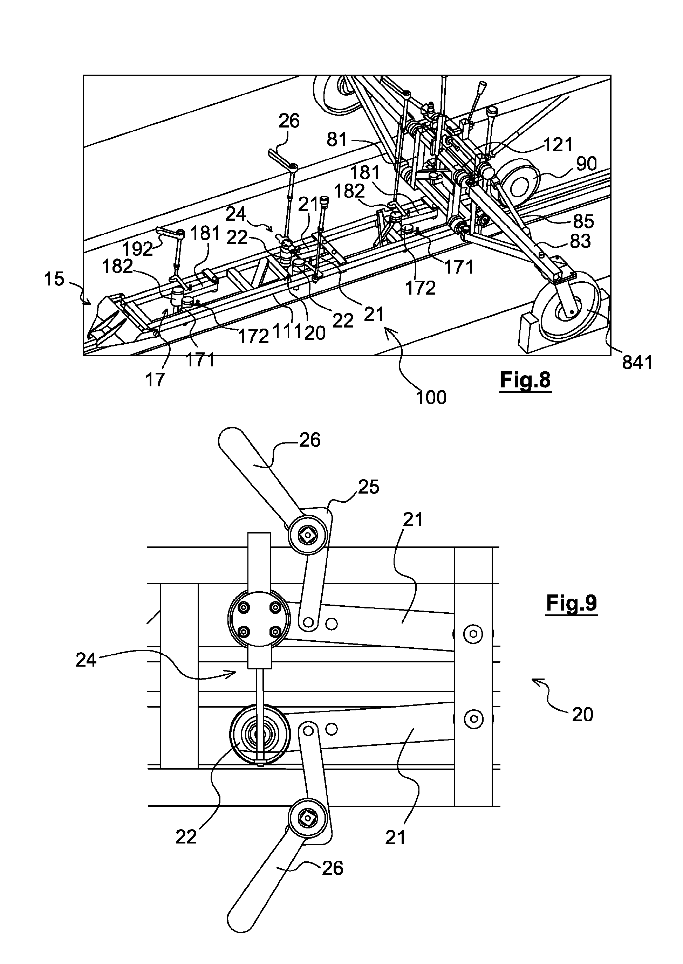

Un exemple non limitatif de réalisation d'un dispositif de mesure 100 est à présent décrit de manière détaillée et illustrée par les figures 2 à 13.

Le dispositif de mesure est décrit dans le cas de son application à la mesure d'une voie de circulation d'un réseau urbain, à rail unique. Mais le dispositif de mesure est également utilisable pour la mesure de tout types de voies de circulation, notamment les voies de circulation à double rails, telles qu'une voie ferrée.

Pour rappel, une voie de circulation comporte, comme illustrée sur la figure 1 :
- un rail de guidage 1, destiné à recevoir des organes de guidage d'un véhicule guidé,
- deux bandes de roulement 5, de part et d'autre du rail de guidage 1, destinées à recevoir chacune des roues motrices et/ou porteuses du véhicule guidé.

Pour toute la description, on définit un repère XYZ, dans lequel l'axe longitudinal X représente une direction longitudinale du rail de guidage, l'axe transversal Y représente une direction transversale au rail de guidage et l'axe vertical Z représente une direction verticale, perpendiculaire aux deux axes longitudinal X et transversal Y.

Comme illustré sur la figure 1, le rail de guidage 1 comporte une semelle 2 et une âme 3 surmontée d'une tête, communément dénommée champignon 4. La semelle 2 est immobilisée au fond d'un caniveau 7 de façon qu'une face supérieure 41 du champignon 4 soit à niveau ou approximativement à niveau avec un plan 51 défini par les deux bandes de roulement 5. Le champignon 4 est séparé de chaque coté des bords du caniveau par des espaces en creux, dits gorges 6, et présente :
- une partie supérieure formée par la face supérieure 41 et deux pistes 42 inclinées symétriques pour le roulage de galets d'organes de guidage du véhicule guidé,
- une partie inférieure formée par deux pistes 43 inclinées symétriques pour la réception de mentonnets des galets d'organes de guidage du véhicule guidé,

Le dispositif de mesure 10 est adapté à la fois à la mesure de cotes du rail de guidage, que ce soit la mesure d'une largeur maximale I du champignon 4 du rail de guidage 1 selon l'axe transversal Y ou la mesure d'un profil transversal du champignon, et à la mesure de flèche h.

Par mesure de flèche, on entend la mesure d'une dénivellation, selon l'axe Z, entre le plan 51 formé par les bandes de roulement 5 et un plan formé par la face supérieure 41 du champignon 4.

La mesure de cote du rail de guidage est obtenue à partir d'une mesure réalisée dans un plan Y0Z.

La mesure de flèche h est obtenue à partir de la mesure d'une flèche verticale, c'est-à-dire une flèche mesurée dans un plan Y0Z.

Le dispositif de mesure 100, destiné à être installé sur la voie de circulation, comporte un chariot de guidage 10.

Le chariot de guidage 10 est destiné à être positionné sur le rail de guidage 1. Il comporte, comme illustré sur les figures 2 à 13 :
- un châssis 11,
- des moyens de roulage 14,
- des moyens de maintien en voie 17,
- des moyens de mise en/retrait de voie 15.

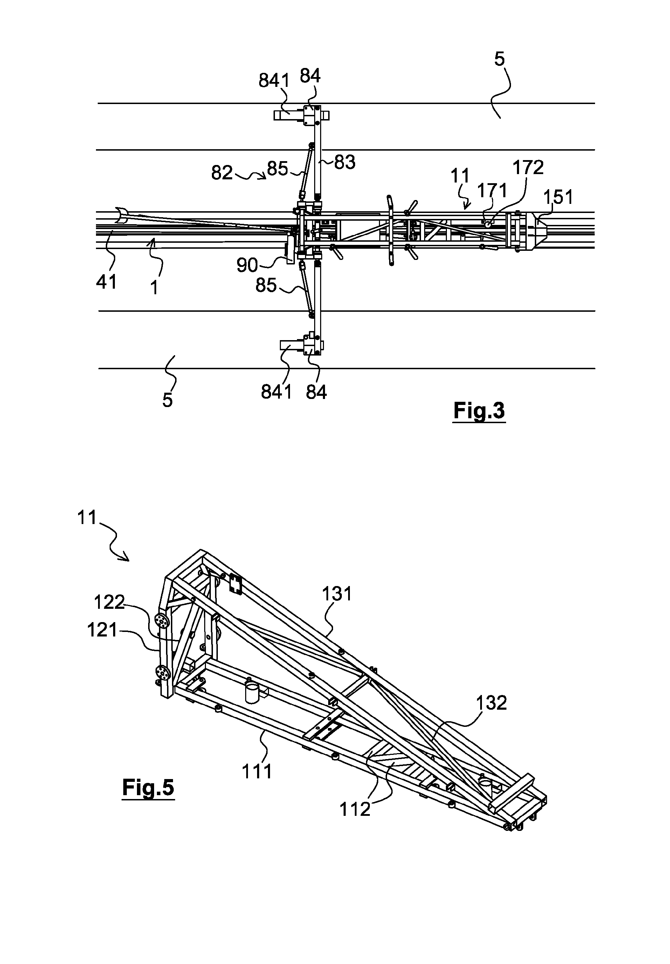

Le châssis 11, illustré figure 5, est destiné à être positionné sur le rail de guidage 1, selon l'axe longitudinal X du rail. Il présente une forme longitudinale, de largeur supérieure à la largeur maximale I du champignon 4 du rail de guidage 1.

Le châssis 11 comporte un cadre inférieur 111, destiné à être positionné en vis-à-vis de la face supérieure 41 du champignon 4 du rail de guidage 1, c'est-à-dire horizontalement, lorsque le dispositif de mesure 100 est en position sur la voie de circulation.

Dans un mode de réalisation, le cadre inférieur 111 comporte un assemblage de profilés, formant par exemple une forme sensiblement rectangulaire.

Dans une forme de réalisation, le cadre inférieur 111 comporte des raidisseurs 112 entre les profilés pour rigidifier ledit cadre inférieur, principalement en torsion et flexion.

Dans un mode préféré de réalisation, le châssis 11 comporte un cadre arrière 121, de préférence sensiblement perpendiculaire au cadre inférieur 111, c'est à dire verticalement selon l'axe vertical Z, lorsque le dispositif de mesure 100 est en position sur la voie de circulation.

De préférence, le cadre arrière 121 est relié au niveau d'une de ses extrémités au cadre inférieur 111.

De préférence, le cadre arrière 121 est relié sensiblement au niveau d'une première extrémité longitudinale du cadre inférieur 111, dite extrémité arrière 113.

Dans la suite de la description, par le terme arrière, on entend l'arrière par rapport à un sens privilégié d'avancement du dispositif de mesure.

De même, par le terme avant, on entend le devant par rapport à un sens privilégié d'avancement du dispositif de mesure.

Dans un mode de réalisation, le cadre arrière 121 comporte un assemblage de profilés, formant par exemple une forme sensiblement rectangulaire.

Dans une forme de réalisation, le cadre arrière 121 comporte des raidisseurs 122 entre les profilés pour rigidifier ledit cadre arrière, principalement en torsion et flexion.

Dans un mode préféré de réalisation, le châssis 11 comporte un cadre supérieur 131. Ledit cadre supérieur 131 relie le cadre inférieur 121 au cadre arrière.

De préférence, le cadre supérieur 131 est relié au niveau de ses extrémités au cadre inférieur 111 et au cadre arrière 121.

De préférence, le cadre supérieur 131 est relié sensiblement au niveau d'une seconde extrémité longitudinale du cadre inférieur 111, dite extrémité avant 114.

Dans un mode de réalisation, le cadre supérieur 131 comporte un assemblage de profilés, formant par exemple une forme sensiblement rectangulaire.

Dans une forme de réalisation, le cadre supérieur 131 comporte des raidisseurs 132 entre les profilés pour rigidifier ledit cadre supérieur, principalement en torsion et flexion.

De préférence, le châssis 11 est réalisé dans un matériau dont les propriétés intrinsèques permettent une excellente rigidité mécanique, et le rendent aisément dimensionnable. Le matériau est choisi de sorte à permettre d'obtenir des performances compatibles avec le dimensionnement d'une structure rigide, servant de référence potentielle à la mesure.

De préférence, afin de minimiser la génération de flexion, le châssis 11 est réalisé en monobloc.

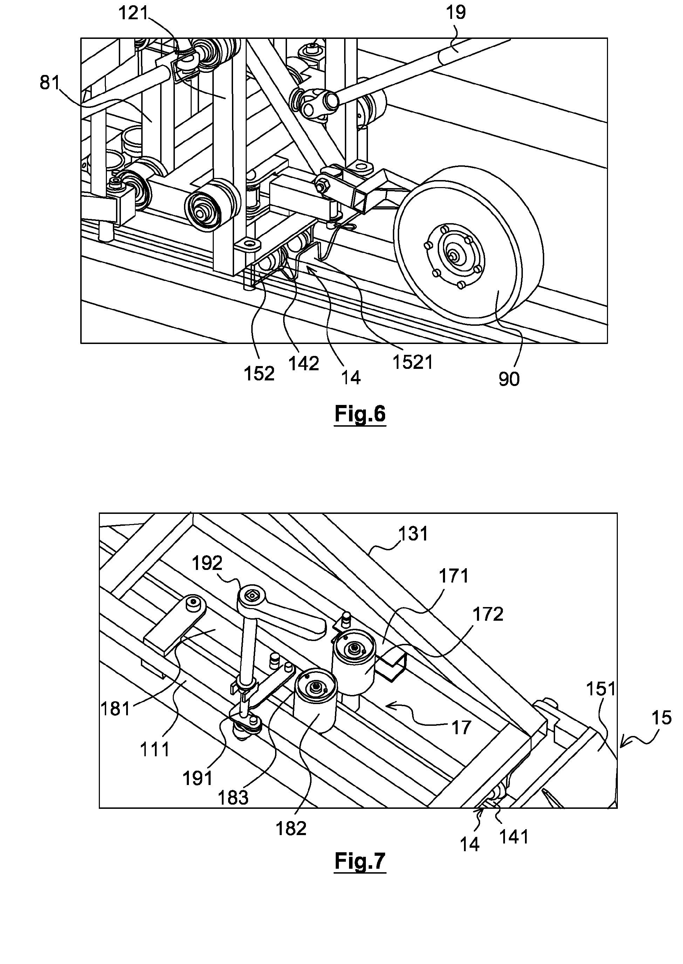

Les moyens de roulage 14 sont destinés à prendre appui et à faire rouler le châssis 11 sur la face supérieure 41 du champignon 4 du rail de guidage 1. Les moyens de roulage, illustrés sur les figures 6 et 7, comportent :
- un premier élément de roulage 141, de préférence sensiblement au niveau de l'extrémité avant 114 du cadre inférieur 111,
- un second élément de roulage 142, de préférence sensiblement au niveau de l'extrémité arrière 113 du cadre inférieur 111.

Les premier et second éléments de roulage 141, 142 prennent chacun appui sur la face supérieure 41 du champignon 4 du rail de guidage 1 afin de conférer une stabilité au chariot de guidage, dans le plan XOY.

Les premier et second éléments de roulage 141, 142 sont configurés pour supporter le poids de l'ensemble du dispositif de mesure.

La longueur des éléments de roulage 141, 142 (la longueur est définie selon l'axe transversal Y lorsque le chariot de guidage est positionné sur le rail de guidage) est choisie de manière à ce qu'elle permette un maintien satisfaisante au rail de guidage, c'est-à-dire, qu'elle empêche des mouvements dynamiques susceptibles de biaiser la mesure. On privilégiera un guidage suffisamment long pour que les solutions technologiques mises en oeuvre garantissent l'équivalence cinématique.

La longueur de guidage ne devra cependant pas être trop importante pour éviter d'élargir la largeur du châssis afin de faciliter le déplacement transversale des organes palpeurs et des organes d'appui (décrits ultérieurement) pour franchir les courbes du tracé plan de rayon serré.

Dans un exemple préféré de réalisation, les premier et second éléments de roulage sont chacun un cylindre, de révolution, tous deux disposés de sorte que le chariot de guidage prenne appui sur la surface latérale courbe desdits cylindres. En d'autres termes, les cylindres sont disposés couchés lorsque le chariot de guidage 10 est en position sur le rail de guidage.

Chaque cylindre présente une longueur au moins égale à une largeur de la face supérieure 41 du champignon 4 du rail de guidage 1.

Dans une forme de réalisation préférée, les cylindres contiennent des roulements rigides à billes à contact radial, précontraints. La mise sous contrainte des roulements à billes a pour but de contraindre les billes à suivre une piste légèrement excentrée, ceci du à la différence de rayon entre celui des billes et celui des bagues de roulements. Avec une telle précontrainte, s'ensuit une hypothèse de jeu radial nul, et par conséquent d'un contact roulement purement rigide. Dans ces conditions, on obtient un cylindre roulant sur une ligne, représentant un sommet du rail de guidage, ce qui peut être assimilé à une liaison ponctuelle.

Les moyens de mise en voie 15, comme illustrés sur les figures 2, 4, 6 et 7, permettent de positionner le chariot de guidage sur le rail de guidage sans détériorer les divers éléments le composant, et comportent :
- une première pièce, dénommée étrave 151, en saillie de l'extrémité avant 114 du châssis 11,
- une deuxième pièce, dénommée guillotine 152, de préférence au niveau de l'extrémité arrière 113 du châssis 11,
- un système de levée du chariot de guidage (non représenté sur les figures).

L'étrave 151 présente un profil en V, comme illustré sur les figures 4 et 7. L'étrave 151 présente un bord d'attaque comportant un évidement 1511 de dimension et de forme telles que lorsqu'un utilisateur du dispositif de mesure vient positionner le chariot de guidage 10 au dessus du rail de guidage 1, l'évidement est positionné en chevauchement sur le champignon 4 du rail de guidage.

Dans l'exemple de réalisation illustré sur les figures 4 et 6, l'évidement du bord d'attaque présente une forme sensiblement parallélépipédique rectangle.

De préférence, l'étrave 151 est reliée fixement à l'extrémité avant 114 du châssis 11, de sorte à maintenir en voie le chariot de guidage 10, lors de l'avancement du dispositif de mesure sur le rail de guidage.

Indépendamment de sa fonction principale de participer à la mise en voie du chariot de guidage 10, l'étrave 151 permet avantageusement, de part sa forme, l'évacuation des objets ou débris accumulés dans les gorges 6 situées entre le rail de guidage 1 et les bandes de roulement 5. En effet, chaque gorge constitue un réceptacle possible pour des objets ou débris pouvant gêner le guidage du dispositif de mesure et perturber la prise des mesures de cote du rail de guidage 1 ou de flèche h.

La guillotine 152 est réalisée sous la forme d'une plaque, sensiblement positionnée verticalement, lorsque le chariot de guidage est en position sur le rail de guidage 1.

La guillotine 152 comporte un évidement 1521 de dimension et de forme telles que, lorsqu'un utilisateur du dispositif de mesure 100 vient positionner le chariot de guidage 10 au dessus du rail de guidage 1, l'évidement 1521 est positionné en chevauchement sur le champignon du rail de guidage.

Dans l'exemple de réalisation illustré sur la figure 5, l'évidement 1521 présente une forme sensiblement rectangulaire.

De préférence, la guillotine 152 est liée solidairement à l'extrémité arrière 113 du châssis 11.

Dans l'ensemble de la description, par deux pièces solidaires ou deux pièce liées/reliées solidairement, on entend deux pièces liées mécaniquement autorisant au moins un degré de liberté.

Par deux pièces fixées ou deux pièces liées/reliées fixement, on entend deux pièces liées mécaniquement n'autorisant aucun degré de liberté entre lesdites deux pièces.

Par degré de liberté dans une liaison, on entend un mouvement relatif indépendant d'une pièce par rapport à une autre autorisé par cette liaison.

Dans l'exemple de la figure 5, la liaison entre la guillotine et le châssis se résume uniquement à une translation d'axe vertical Z.

Dans une forme de réalisation, la guillotine se lève manuellement, au moyen d'une poignée, et se fixe en position haute par des moyens de fixations, tels que des vis à oreilles, pour ne pas frotter sur le rail pendant les mesures.

Le système de levée du chariot de guidage est destiné à solidariser ou désolidariser le chariot de guidage du rail de guidage.

Dans un exemple de réalisation, le système de levée du chariot de guidage comporte :
- un moyen de soulèvement du chariot de guidage entre une première position correspondant à une position, dite de travail, où le chariot de guidage est en position sur le rail de guidage et une deuxième position correspondant à une position dite haute où aucun élément constituant le chariot de guidage ne touche le rail de guidage,
- un ensemble de roulage pour permettre un déplacement aisé du chariot de guidage lorsqu'il est en position haute, en dehors ou en direction du rail de guidage.

Les moyens de maintien en voie 17 sont configurés et destinés à permettre au chariot de guidage 10 de suivre le rail de guidage, surtout en virage.

Les moyens de maintien en voie 17, comme illustrés sur les figures 2, 3, 7 et 8, comportent deux paires de deux organes d'appui.

Chaque paire comporte :
- un palier fixe 171, relié fixement au cadre inférieur 111, configuré pour porter un premier organe d'appui 172, ledit premier organe d'appui étant destiné à venir en appui contre un premier flanc du champignon 4 du rail de guidage 1,
- un bras oscillant 181, solidaire à une première extrémité au cadre inférieur 111 et à une seconde extrémité opposée à un second organe d'appui 182, ledit second organe d'appui étant destiné à venir en appui contre un second flanc, opposé au premier flanc, du champignon 4 du rail de guidage 1,
- un moyen de rappel (non représenté) destiné à maintenir plaqué le second organe d'appui contre le second flanc du champignon du rail de guidage.

Le premier organe d'appui 172 et le second organe d'appui 182 sont destinés à, et configurés pour, être positionnés de part et d'autre du champignon 4 du rail de guidage 1, lorsque le chariot de guidage est en position sur le rail de guidage.

De préférence, une première paire est positionnée à proximité de l'extrémité avant 114 du cadre inférieur 111 et la seconde paire est positionnée à proximité de l'extrémité arrière 113 du cadre inférieur 111.

En d'autres termes, le chariot de guidage 10 est ainsi maintenu guidé au rail de guidage 1 au moyen d'organes d'appui à l'avant et à l'arrière dudit chariot de guidage, ajustés par une mise sous pression grâce à un moyen de rappel.

Dans un exemple non limitatif d'un moyen de rappel, ledit moyen de rappel est un ressort (ressort de compression, de traction ou de torsion).

Les premier et second organes d'appui 172, 182 présentent chacun une longueur suffisante, selon l'axe vertical Z, pour venir se plaquer au niveau de la largeur maximale I du champignon du rail de guidage.

De préférence, les premier et second organes d'appui sont disposés sur le châssis 11 de façon telle que, lorsque le chariot de guidage 10 est en position sur le rail de guidage 1, lesdits premier et second organes d'appui sont sensiblement sur un même axe transversal Y.

Dans un exemple préféré de réalisation des organes d'appui, les organes d'appui sont des galets cylindriques.

Chaque galet cylindrique est choisi de sorte à maintenir un compromis encombrement/diamètre convenable, afin d'éviter les vitesses de rotation des organes d'appui inutilement élevées, pouvant conduire à une usure prématurée, et donc pouvant influer sur les mesures que peut réaliser le dispositif de mesure, et qui seront décrites ultérieurement.

Dans une forme de réalisation des galets cylindriques, lesdits galets cylindriques sont des arbres, de préférence durcis. Ainsi, il est possible d'assimiler chaque arbre traité thermiquement à un solide indéformable. La surface de contact entre le rail de guidage et ces galets cylindriques étant suffisamment faible, on peut donc introduire un contact ponctuel pour modéliser la liaison rail de guidage/châssis (Théorie de Hertz).

La liaison solidaire entre le bras oscillant 181 et le cadre inférieur 111 du châssis se résume à une rotation selon l'axe vertical Z.

Dans un exemple préféré de réalisation du bras oscillant 181, ledit bras oscillant est une bielle reliée solidairement à un arbre monté dans une chape fixée solidairement au cadre inférieur 111 du châssis 11.

Dans un mode de réalisation, pour faciliter la mise en voie et/ou le retrait du chariot de guidage 10 du rail de guidage 1, le dispositif de mesure comporte un premier système 191 d'écartement du bras oscillant du rail de guidage 1, destiné à, et configuré pour, s'opposer à la force de rappel du moyen de rappel, et permettre d'écarter le second organe d'appui 182 du premier organe d'appui 172, de préférence selon l'axe transversal Y.

Le dispositif de mesure 100 comporte, en complément du premier système 191 d'écartement du bras oscillant, un premier système 192 de blocage du bras oscillant 181 contre le châssis 11 pour faciliter la mise en voie du chariot de guidage.

Dans un mode de réalisation, le dispositif de mesure 100 comporte un moyen 20 de mesure de cote du rail de guidage, selon l'axe transversal Y.

Ledit moyen 20 de mesure de cote du rail de guidage comporte :
- deux bras oscillants 21, chaque bras oscillant étant solidaire à une première extrémité au cadre inférieur 111 et à une seconde extrémité opposée à un organe palpeur 22,
- deux moyens de rappel d'un organe palpeur, un moyen de rappel par bras oscillant,
- un organe 24 de mesure de l'écartement entre les deux organes palpeurs.

Les deux organes palpeurs 22 sont solidaires du cadre inférieur 111 du châssis 11, via les bras oscillants 21. Les deux organes palpeurs 22 sont destinés à, et configurés pour, être positionnés de part et d'autre du champignon 4 du rail de guidage 1, lorsque le chariot de guidage est en position sur le rail de guidage. Un organe palpeur 22 est destiné à venir en appui contre le premier flanc du champignon 4 du rail de guidage et l'autre organe palpeur est destiné à venir en appui contre le second flanc du champignon 4 du rail de guidage. Chaque moyen de rappel d'un organe palpeur est destiné à maintenir plaqué l'organe palpeur associé contre le flanc du champignon du rail de guidage. Chaque moyen de rappel d'un organe palpeur est configuré pour rapprocher l'organe palpeur associé vers l'autre organe palpeur.

De préférence, le moyen 20 de mesure de cote du rail de guidage est positionné sensiblement à mi-distance des deux paires de deux organes d'appui des moyens de maintien en voie 17, c'est-à-dire sensiblement à mi-longueur du cadre inférieur 111.

Les organes palpeurs 22 présentent chacun, lorsque le chariot de guidage est en position sur le rail de guidage, une longueur suffisante, selon l'axe vertical Z, pour venir se plaquer au moins au niveau de la largeur maximale I du champignon 4 du rail de guidage 1.

De préférence, les organes palpeurs 22 sont disposés sur le cadre inférieur 111 du châssis 11 de façon telle que, lorsque le chariot de guidage 10 est en position sur le rail de guidage 1, lesdits premier et second organes d'appui sont sensiblement sur un même axe transversal Y.

Les deux moyens de rappel d'un organe palpeur permettent de rapprocher les deux organes palpeurs 22 l'un de l'autre, selon l'axe transversal Y.

Dans un exemple non limitatif d'un moyen de rappel, ledit moyen de rappel est un ressort (ressort de compression, de traction ou de torsion).

La liaison solidaire entre un bras oscillant 21 et le cadre inférieur 111 du châssis se résume à une rotation selon l'axe vertical Z.

Dans un exemple préféré de réalisation du bras oscillant, ledit bras oscillant est une bielle reliée solidairement à un arbre monté dans une chape fixée solidairement au cadre inférieur 111 du châssis 11.

Les bras oscillants sont de préférence disposés sur le châssis de telle sorte que lesdits bras oscillants soient positionnés au centre de l'empattement entre les deux moyens de roulage 141, 142. Une telle disposition des bras oscillants rend la prise de mesure insensible à d'éventuels mouvements dynamiques de lacet, mouvements dynamiques de lacet qui se caractérisent par une rotation d'axe vertical Z et passant par le centre dudit empattement.

Le recours à des bras oscillants permet avantageusement de franchir les appareils de dilatation. L'écartement maximal latéral entre les deux organes palpeurs est défini de sorte à permettre le passage des appareils de dilatation. Il est également défini de sorte à franchir les courbes du rail de guidage de rayon serré.

Dans un mode de réalisation, pour faciliter la mise en voie et/ou le retrait du chariot de guidage 10 du rail de guidage 1, le dispositif de mesure comporte des deuxièmes systèmes 25 d'écartement des bras oscillants l'un de l'autre, un système par bras oscillants, destinés à, et configurés pour, s'opposer à la force de rappel des moyens de rappel, et permettre d'écarter les organes palpeurs 22 l'un de l'autre, selon l'axe transversal Y.

Le dispositif de mesure comporte, en complément du deuxième système d'écartement des bras oscillants, des deuxièmes systèmes 26 de blocage des bras oscillants 21 contre le châssis 11, un système par bras oscillants, pour faciliter la mise en voie du chariot de guidage.

Dans un exemple de réalisation de l'organe de mesure 24, ledit organe de mesure est un capteur de déplacement linéaire destiné à mesurer une variation de l'écartement entre les deux organes palpeurs.

De préférence, ledit organe de mesure est un capteur électrique passif, de type inductif, tel qu'un capteur LVDT, de l'anglais *Linear Variable Differential Transformer,* permettant la mesure de déplacement linéaire.

L'organe de mesure, sous la forme d'un capteur LVDT, comporte deux parties :
- un corps, solidaire d'un bras oscillant,
- une tige, solidaire de l'autre bras oscillant.

Le corps est enfermé dans une bride fixée solidairement à un organe palpeur. La tige est enfermée dans une bride fixée solidairement à l'autre organe palpeur.

L'organe de mesure permet d'obtenir le déplacement relatif du corps par rapport à la tige, et par conséquent le déplacement relatif d'un organe palpeur par rapport à l'autre organe palpeur.

Un tel moyen 20 de mesure de cote du rail de guidage permet, suivant la forme des galets palpeurs, soit la mesure de la largeur maximale I du champignon 4 du rail de guidage 1 soit la mesure du profil dudit champignon.

### a) Forme des galets palpeurs pour la mesure de la largeur maximale I du champignon du rail de guidage

Pour mesurer la largeur maximale I du champignon 4 du rail de guidage, les organes palpeurs 22 sont configurés pour venir se plaquer au niveau de la plus grande largeur du rail.

L'axe transversal Y sur lequel sont positionnés les deux organes palpeurs 22, définit l'axe de mesure.

Dans une forme préférée de réalisation des organes palpeurs 22, lesdits organes palpeurs sont des galets cylindriques.

Comme pour les galets cylindriques des organes d'appui, chaque galet cylindrique est choisi de sorte à maintenir un compromis encombrement/diamètre convenable, afin d'éviter les vitesses de rotation des organes d'appui inutilement élevées, pouvant conduire à une usure prématurée, et donc pouvant influer sur les mesures que peut réaliser le dispositif de mesure, et qui seront décrites ultérieurement.

Dans un exemple de réalisation des galets cylindriques, lesdits galets cylindriques sont des arbres, de préférence durcis.

### b) Forme des galets palpeurs pour la mesure du profil du champignon, du rail de guidage

Dans une autre forme de réalisation des organes palpeurs 22, pour réaliser la mesure du profil du champignon du rail de guidage, lesdits organes palpeurs sont des galets, de préférence cylindriques, comportant une excroissance (non représentée) rentrante en direction de l'âme 3 du rail de guidage 1, lorsque le chariot de guidage 10 est en position sur ledit rail de guidage.

De préférence, l'excroissance est dimensionnée de sorte à présenter une dimension suffisante pour venir sonder n'importe quelle cote latérale du champignon.

Une telle forme de réalisation permet, de venir prendre une mesure, suivant le positionnement de l'excroissance vis-à-vis du rail de guidage, de toute cote latérale du champignon.

Dans des exemples de réalisation non limitatifs, l'excroissance est un ergot ou une roulette.

Dans un mode de réalisation, le dispositif de mesure comporte des moyens de réglage (non représentés) selon l'axe vertical Z de chaque organe palpeur. De tels moyens de réglage permettent de venir positionner l'excroissance de l'organe palpeur pour effectuer la mesure de cote souhaitée.

Le dispositif de mesure comporte, en complément des moyens de réglage, des moyens de déplacement (non représentés) de l'organe palpeur entre une première et une deuxième hauteur. Un tel mode de réalisation permet la mesure de différentes cotes du champignon du rail de guidage, pour une même position du dispositif de mesure selon l'axe longitudinal X.

Dans un autre mode de réalisation, le dispositif de mesure comporte une pluralité de moyens de mesure de cote 20, décalés les uns des autres selon l'axe longitudinal X, lorsque le chariot de guidage 10 est en position sur ledit rail de guidage. Chaque organe palpeur 22 comporte une excroissance. Les excroissances de chaque paire d'organes palpeurs sont positionnées, selon l'axe vertical Z, de sorte à ce que chaque organe de mesure 24 associé à une paire d'organe palpeur vient mesurer une cote spécifique du champignon, à une hauteur différente.

Que ce soit pour la mesure de la largeur du champignon du rail de guidage ou la mesure du profil dudit champignon, la mesure est réalisée pas à pas par un utilisateur poussant le dispositif de mesure 100, par exemple via une barre de poussée 19 fixée à l'arrière du chariot de guidage 10, comme illustré sur les figures 2 ou 6.

Pour chaque positionnement du chariot de guidage le long de l'axe longitudinal X du rail de guidage 1, une mesure est réalisée par l'organe de mesure 24 (ou par chaque organe de mesure, selon le mode de réalisation) et stockée dans un système d'enregistrement des mesures 16.

Dans un exemple de réalisation, une mesure est réalisée tous les 2,5cm.

Dans un mode de réalisation amélioré, dans le cas où la largeur de la face supérieure 41 du champignon 4 du rail de guidage 1 n'est pas suffisamment large, le dispositif de mesure 100 comporte, pour minimiser un risque de rotation parasite selon l'axe longitudinal X :
- un second cadre, dit cadre mobile 81, solidaire du cadre arrière 121, et mobile verticalement par rapport audit cadre arrière,
- deux demi-essieux 82 s'étendant de part et d'autre du chariot de guidage 10.

Chaque demi-essieu 82 comporte un moyen d'appui 84 destiné à prendre appui et à rouler sur une bande de roulement 5 de la voie de circulation et un bras de liaison 83 reliant le moyen d'appui 84 audit chariot de guidage.

Chaque moyen d'appui 84 comporte une roue 841 destinée à venir s'appuyer sur une bande de roulement 5.

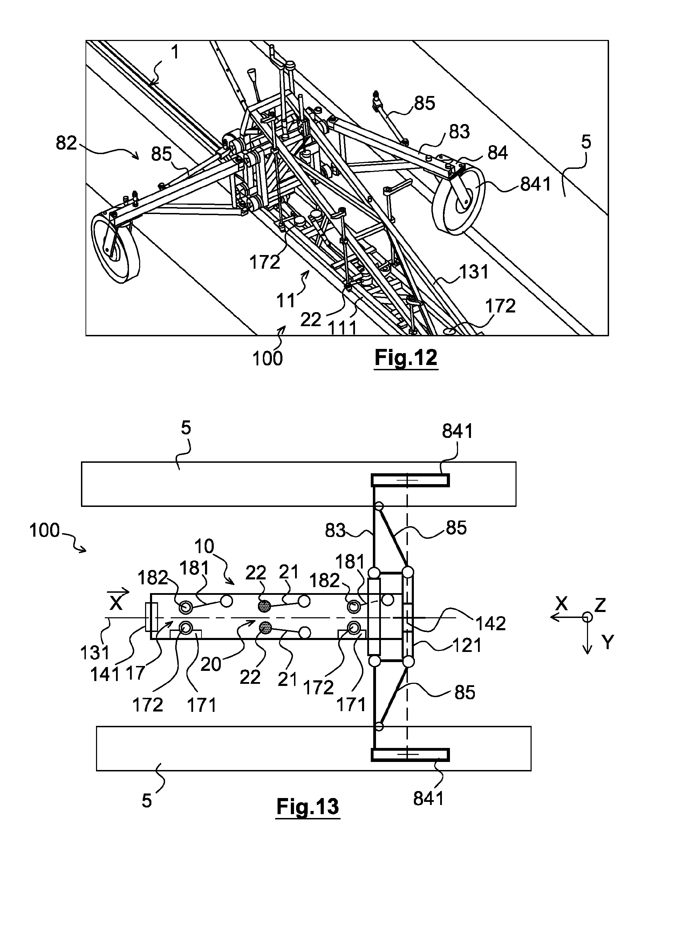

Le centre de chaque roue 841 est configuré de sorte à se positionner dans le même axe transversal Y que le cadre arrière 121, comme illustré sur la figure 13.

Dans un exemple de réalisation des roues 841, afin de minimiser les déformations, lesdites roues sont réalisées en acier soudé avec un revêtement en polyuréthane dur.

Chaque bras de liaison 83 est relié solidairement au cadre mobile 81.

Chaque bras de liaison 83 est assimilé à une poutre suffisamment rigide de sorte à résister à la torsion et à la flexion lors du déplacement du dispositif de mesure sur la voie de circulation.

Dans un mode de réalisation, chaque bras de liaison 83 comporte un assemblage de profilés, formant par exemple une forme sensiblement triangulaire.

Dans une forme de réalisation, pour renforcer le bras de liaison, ledit bras de liaison est en outre relié solidairement au cadre arrière 121 fixe, via une bielle de renfort 85, comme illustrée sur la figure 12.

Dans un mode de réalisation préféré, pour faciliter le transport et le stockage du dispositif de mesure, chaque demi-essieu 82 est repliable, par débrochage de la bielle de renfort 85 au niveau du cadre arrière 121 et par rotation des bras de liaison selon l'axe vertical Z, par exemple en direction du châssis 11.

Dans un mode de réalisation, le cadre mobile 81 comporte un assemblage de profilés, formant par exemple une forme sensiblement identique à la forme du cadre arrière 121. Dans l'exemple d'un cadre arrière de forme rectangulaire, le cadre mobile 81 présente une forme rectangulaire idoine.

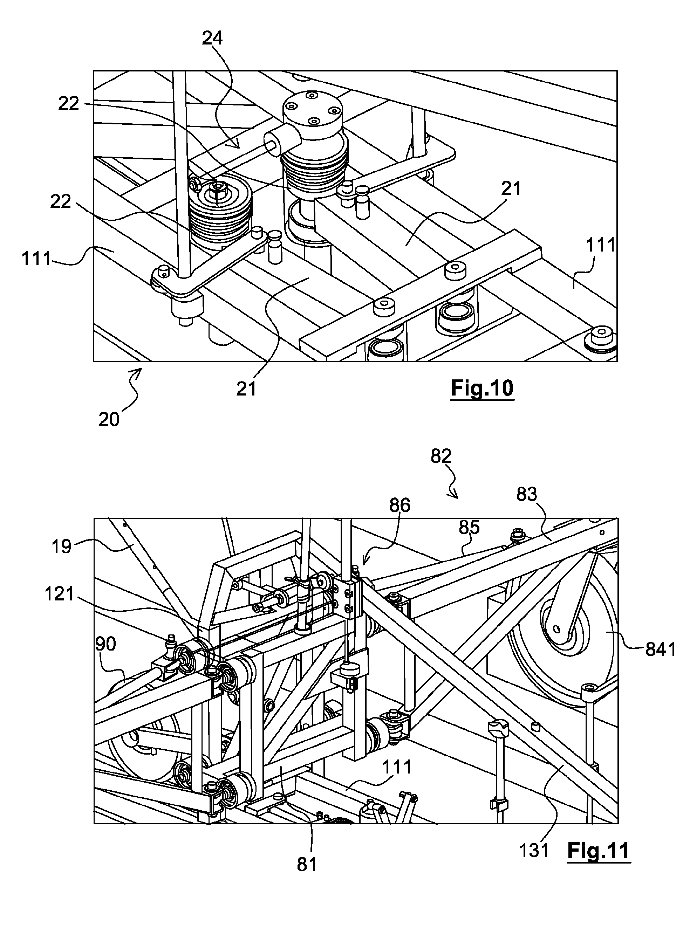

La liaison entre le cadre arrière 121, et par conséquent le châssis 11 du chariot de guidage 10, et le cadre mobile 81 et les deux demi-essieux 82 est constituée par une liaison dite du parallélogramme, comme illustrée sur la figure 11. Le cadre arrière 121 étant fixe, le cadre mobile 81 effectue une sorte de mouvement de balancier en restant toujours parallèle au cadre arrière 121.

Ainsi, l'ensemble formé par les deux demi-essieux 82 et le cadre mobile 81 permet de stabiliser le chariot de guidage en roulis, quelque soit la dénivellation, selon l'axe vertical Z, entre le plan 51 formé par les bandes de roulement 5 et le plan formé par la face supérieure 41 du champignon 4.

Indépendamment de sa fonction principale de stabilisation du chariot de guidage en roulis, l'ensemble formé par les deux demi-essieux 82 et le cadre mobile 81 permet de mesurer la flèche h de la voie de circulation. En effet, la mesure de la flèche h repose sur le débattement selon l'axe vertical Z du cadre mobile 81 par rapport au cadre arrière 121.

Dans un mode de réalisation préféré, le dispositif de mesure comporte un moyen 86 de mesure de la flèche h, c'est à dire du débattement selon l'axe vertical Z du cadre mobile par rapport au cadre fixe.

Dans un exemple de réalisation du moyen 86 de mesure de la flèche h, ledit moyen de mesure est un capteur de déplacement linéaire destiné à mesurer une variation de l'écartement entre le cadre arrière 121 et le cadre mobile 81.

De préférence, ledit moyen de mesure est un capteur électrique passif, de type inductif, tel qu'un capteur LVDT, de l'anglais *Linear Variable Differential Transformer,* permettant la mesure de déplacement linéaire. Le moyen de mesure est fixé d'une part au châssis et d'autre part repose sur une surface plane, dite de contre appui, solidaire du cadre mobile, dont un mode de réalisation préféré est une tête de vis moletée.

La fixation du corps du capteur LVDT sur le châssis se base sur le même concept que l'organe de mesure 24, avec un corps et une tige.

Le corps est solidaire du châssis. Dans l'exemple de la figure 11, le corps est une plaque fixée au châssis, comprenant un évidement semi-circulaire pour le passage de la tige.

La tige est munie d'un embout palpeur, et d'un ressort en traction le maintenant « naturellement sorti », assurant le contact permanent sur la surface de contre appui, sur la tête de vis moletée.

Seule la composante verticale du mouvement est mesurée ce qui correspond rigoureusement à une mesure directe de flèche verticale par différence entre le déplacement entre le cadre mobile 81 et le cadre arrière. Cependant, en raison de la cinématique de l'articulation, le mouvement du cadre mobile 81 par rapport au cadre arrière ne correspond pas à une translation verticale pure. L'extrémité du capteur ne peut donc y être fixée par encastrement, elle repose donc sur la surface de contre appui, horizontale, dudit cadre mobile.

L'organe de mesure permet d'obtenir le déplacement relatif du corps par rapport à la tige, et par conséquent le déplacement relatif du cadre mobile par rapport au cadre fixe, donc la flèche h.

Dans un exemple de réalisation, le corps du moyen de mesure est fixé au châssis, de préférence au niveau du cadre supérieur, par bridage/ajustage.

Le moyen de mesure palpe le cadre mobile 81 via une tête de vis moletée et rectifiée fixée sur le cadre mobile.

Une telle mesure de flèche est réalisée pas à pas par l'utilisateur poussant le dispositif de mesure 100, par exemple via la barre de poussée 19.

Pour chaque positionnement du chariot de guidage le long de l'axe longitudinal X du rail de guidage 1, une mesure est réalisée par le moyen de mesure 86 et stockée dans un système d'enregistrement des mesures 16.

Dans un exemple de réalisation, une mesure est réalisée tous les 2,5cm.

Le dispositif de mesure comporte en outre un dispositif de localisation de la position odométrique des points fixes sur la voie ferrée. Un tel dispositif de localisation permet de localiser les éventuels défauts de la voie de circulation (cote du rail de guidage ou flèche) par rapport à ces points fixes.

Le dispositif d'odométrie permet la détermination de la mesure d'une distance parcourue sur la voie de circulation par le dispositif de mesure.

Dans un mode de réalisation préféré, le dispositif d'odométrie comporte un codeur incrémental visant une roue dentée 90, plaquée contre le rail de guidage. Des butées latérales limitent le débattement de ladite roue dentée.

Dans un exemple préféré de réalisation, la roue dentée 90 est reliée au châssis, au niveau du cadre arrière 121.

Ladite roue a deux positions :
- une première position dite de travail, en appui sur le rail de guidage,
- une deuxième position dite escamotée, pour son stockage lors des transports.

Dans un autre mode de réalisation, ou en complément du codeur incrémental, le dispositif d'odométrie comporte un dispositif auxiliaire de localisation, par exemple du type par satellite tel que le système dit GPS (Global positioning system). Un tel dispositif auxiliaire permet de prélocaliser le dispositif de mesure sur la voie en assurant un repérage absolu approximatif.

Dans un mode de réalisation préféré, les mesures étant effectuées de nuit pour ne pas perturber le fonctionnement normal des véhicules guidés, le dispositif de mesure 100 comporte une source lumineuse (non représentée) pour éclairer le rail de guidage 1, de préférence fixée sur le châssis 11 du chariot de guidage.

Dans un mode de réalisation préféré, le dispositif de mesure 100 comporte un système de détections des anomalies (non représenté).

Par détection des anomalies, on entend la détection du décollement des organes palpeurs et/ou des organes d'appui du rail du guidage, la détection de mesures incohérentes ou d'écarts invraisemblables, ou encore une vitesse d'avance trop importante.

Dans un mode de réalisation préféré, pour contrôler une éventuelle dilatation du rail du guidage pouvant influer sur les mesures effectuées, le dispositif de mesure comporte un capteur de température (non représenté).

Dans un mode de réalisation préféré, pour contrôler une éventuelle usure ondulatoire du flanc latéral du rail de guidage, ou pour identifier des phénomènes périodiques d'usure affectant ledit rail de guidage, un système de mesure complémentaire peut être installé. Ledit système de mesure complémentaire est avantageusement constitué d'un capteur linéaire de déplacement, par exemple de type LVDT (non représenté) fixé, pour son corps à un dispositif solidaire de la partie basse 111 du châssis 11 et pour sa tige à un des bras oscillants 21. La mesure ainsi réalisée correspond à une mesure directe de flèches horizontales décrivant la courbure locale du rail de guidage dans un plan XOY. Un traitement des données brutes de mesures, de type « flèches » peut avantageusement être réalisé à l'aide du procédé exposé dans la demande de brevet FR 13 54118 du demandeur.

Dans un mode de réalisation préféré, pour identifier individuellement la hauteur entre une bande de roulement 5 et le plan formé par la face supérieure 41 du champignon 4 du rail de guidage 1, un capteur, par exemple de type « codeur angulaire », est disposé entre un axe vertical Z solidairement fixé à une liaison pivot (non représentée) liée à l'axe de la roue 841 et un bras de mesure dont l'extrémité vient au contact de la face supérieur 41 du champignon 4 du rail de guidage 1. L'extrémité de ce bras de mesure est par exemple constituée d'un galet de faible dimension.

La longueur dudit bras de mesure étant constante et connue, par calcul trigonométrique simple, impliquant l'ange fournit par le capteur de type « codeur angulaire », la distance verticale entre la bande de roulement et la face supérieure 41 peut être aisément déterminée dans un repère local dont l'axe transversal Y est matéralisé par une demie droite joignant le milieu de la face 41 et le point de contact pneu avec la bande de roulement.

## Revendications

1. Dispositif (100) de mesure de l'état d'une voie de circulation d'un véhicule guidé, ladite voie de circulation comportant un rail de guidage (1), d'axe longitudinal X, comportant une tête dite champignon (4), **caractérisé en ce que** le dispositif de mesure comporte :
- un chariot de guidage (10), destiné à être disposé le long de l'axe longitudinal X du rail de guidage (1),
- deux organes palpeurs (22), solidaires du chariot de guidage (10), destinés à être positionnés de part et d'autre du champignon (4) du rail de guidage lorsque ledit dispositif de mesure est en position sur la voie de circulation,
- un moyen de rappel d'un organe palpeur (22) vers l'autre organe palpeur (22),
- un organe (24) de mesure de l'écartement entre les deux organes palpeurs,
- un cadre (121), fixe, lié au chariot de guidage (10),
- un second cadre (81), mobile par rapport audit cadre fixe,
- deux demi-essieux (82), s'étendant de part et d'autre du chariot de guidage (10), solidaires du second cadre (81) et comportant chacun un moyen d'appui (84) destiné à prendre appui sur une bande de roulement (5) de la voie de circulation.

2. Dispositif de mesure selon la revendication 1 comportant deux moyens de rappel, un moyen de rappel par organe palpeur (22).

3. Dispositif de mesure selon l'une des revendications précédentes comportant des moyens de maintien en voie (17).

4. Dispositif de mesure selon l'une des revendications précédentes comportant des moyens de mise en voie (15).

5. Dispositif de mesure selon l'une des revendications précédentes dans lequel un organe palpeur (22) présente une excroissance.

6. Dispositif de mesure selon l'une des revendications précédentes comportant des moyens de réglage d'un organe palpeur (22).

7. Dispositif de mesure selon l'une des revendications précédentes comportant des moyens de déplacement de l'organe palpeur (22).

8. Dispositif de mesure selon l'une des revendications précédentes comportant une pluralité d'organes palpeurs (22) assemblés par paire.

9. Dispositif de mesure selon l'une des revendications précédentes comportant un moyen (86) de mesure du déplacement du second cadre (81) par rapport au cadre fixe (121).

10. Dispositif de mesure selon l'une des revendications précédentes dans lequel au moins demi-essieu (82) est repliable.

11. Dispositif de mesure selon l'une des revendications précédentes comportant un système d'enregistrement des mesures (16).

## Patentansprüche

1. Vorrichtung (100) zum Messen des Zustands eines Gleises eines geführten Fahrzeugs, wobei das genannte Gleis eine Führungsschiene (1), mit der Längsachse X, aufweist, welche einen Kopf genannt Pilz (4) aufweist, **dadurch gekennzeichnet, dass** die Vorrichtung zum Messen aufweist:
- einen Führungswagen (10), der dazu bestimmt ist, entlang der Längsachse X der Führungsschiene (1) angeordnet zu sein,
- zwei Fühlerorgane (22), die fest mit dem Führungswagen (10) verbunden sind, die dazu bestimmt sind, beiderseits des Pilzes (4) der Führungsschiene positioniert zu werden, wenn die genannte Vorrichtung zum Messen am Gleis positioniert ist,
- ein Mittel zum Zurückziehen eines Fühlerorgans (22) hin zum anderen Fühlerorgan (22),
- ein Organ (24) zum Messen des Abstands zwischen den beiden Fühlerorganen,
- einen Rahmen (121), der feststehend ist, und der mit dem Führungswagen (10) verbunden ist,
- einen zweiten Rahmen (81), der bezogen auf den genannten feststehenden Rahmen beweglich ist,
- zwei Halbachsen (82), die sich beiderseits des Führungswagens (10) erstrecken, die fest mit dem zweiten Rahmen (81) verbunden sind und jeweils ein Abstützmittel (84) aufweisen, das dazu bestimmt ist, auf einer Lauffläche (5) des Gleises abgestützt zu sein.

2. Vorrichtung zum Messen nach Anspruch 1, aufweisend zwei Mittel zum Zurückrufen, ein Mittel zum Zurückrufen pro Fühlerorgan (22).

3. Vorrichtung zum Messen nach einem der vorangehenden Ansprüche, aufweisend Mittel zum Halten auf dem Gleis (17).

4. Vorrichtung zum Messen nach einem der vorangehenden Ansprüche, aufweisend Mittel zum Setzen auf das Gleis (15).

5. Vorrichtung zum Messen nach einem der vorangehenden Ansprüche, bei dem ein Fühlerorgan (22) einen Vorsprung aufweist.

6. Vorrichtung zum Messen nach einem der vorangehenden Ansprüche, aufweisend Mittel zum Einstellen eines Fühlerorgans (22).

7. Vorrichtung zum Messen nach einem der vorangehenden Ansprüche, aufweisend Mittel zum Bewegen des Fühlerorgans (22).

8. Vorrichtung zum Messen nach einem der vorangehenden Ansprüche, aufweisend eine Vielzahl von Fühlerorganen (22), die paarweise montiert sind.

9. Vorrichtung zum Messen nach einem der vorangehenden Ansprüche, aufweisend ein Mittel (86) zum Messen der Bewegung des zweiten Rahmens (81) bezogen auf den feststehenden Rahmen (121).

10. Vorrichtung zum Messen nach einem der vorangehenden Ansprüche, bei dem mindestens eine Halbachse (82) klappbar ist.

11. Vorrichtung zum Messen nach einem der vorangehenden Ansprüche, aufweisend ein System zum Speichern der Messungen (16).

## Claims

1. Device (100) for measuring the state of a circulation track of a guided vehicle, said circulation track comprising a guiding rail (1), of longitudinal axis X, comprising a so-called railhead (4),
**characterized in that** the measurement device comprises:
- a guiding carriage (10), intended to be arranged along the longitudinal axis X of the guiding rail (1),
- two feeler members (22), secured to the guiding carriage (10), intended to be positioned on either side of the guiding railhead (4) when said measurement device is in position on the circulation track,
- a means for returning a feeler member (22) towards the other feeler member (22),
- a member (24) for measuring the separation between the two feeler members,
- a frame (121), fixed, linked to the guiding carriage (10),
- a second frame (81), mobile relative to said fixed frame,
- two half-axles (82), extending on either side of the guiding carriage (10), secured to the second frame (81) and each comprising a bearing means (84) intended to bear on a tread surface (5) of the circulation track.

2. Measurement device according to Claim 1, comprising two return means, one return means for each feeler member (22).

3. Measurement device according to one of the preceding claims, comprising means for holding it on the track (17).

4. Measurement device according to one of the preceding claims, comprising means for laying it on the track (15).

5. Measurement device according to one of the preceding claims, in which a feeler member (22) has a protuberance.

6. Measurement device according to one of the preceding claims, comprising means for adjusting a feeler member (22).

7. Measurement device according to one of the preceding claims, comprising means for displacing the feeler member (22).

8. Measurement device according to one of the preceding claims, comprising a plurality of feeler members (22) assembled in pairs.

9. Measurement device according to one of the preceding claims, comprising a means (86) for measuring the displacement of the second frame (81) relative to the fixed frame (121).

10. Measurement device according to one of the preceding claims, in which at least one half-axle (82) can be folded.

11. Measurement device according to one of the preceding claims, comprising a measurement recording system (16).
